# EUROPEAN PATENT APPLICATION

(11) **EP 4 640 043 A1**
(43) Date of publication of application: **29.10.2025**
(21) Application number: 24172693.4
(22) Date of filing: 26.04.2024
(51) Int. Cl.: A01G 22/05, G01B 5/00

(54) **DEVICE AND METHOD FOR MEASURING THE GROWTH OF A LIVING BEING, COMPRISING WIRELESS COMMUNICATION TAG AND A LENGTH MEASURING TOOL**

(71) Applicant: Fyffes International S.A., 1290 Versoix (CH)
(72) Inventor: VAN LINGEN, Frederick, 30104 SAN NICOLAS, CARTAGO (CR); FINOL, Claudio, 1196 GLAND (CH)
(74) Representative: IXAS Conseil

(57) **Abstract**

The disclosure relates to a growth measuring device (2) configured to measure growth of a living being (1). The growth measuring sensor (2) comprises a length measuring tool configured to measure a length of the living being (1). The growth measuring sensor (2) comprises a wireless communication tag (70) configured to transmit to a reader (9) a representative length value which is representative of the measured length measure by the length measuring tool (4). The length measuring tool includes a caliper (6).

## Description

### TECHNICAL FIELD

The invention relates to a wireless communication system and device for measuring the growth of a living being or a part thereof, which is preferably a plant part such as a trunk of a tree or a fruit. In particular, the wireless communication device is configured to be attached to a growing part of a living being, such as any member of an animal, the trunk or a branch of a tree, or around the circumference of a fruit, and to measure a length parameter of said living being or part thereof such as a circumference or a diameter.

The invention also relates to a radioelectric network comprising a plurality of said wireless communication sensors together with a reading device. The invention also relates to a harvesting process for plants or parts of plants based on growth detection by the wireless communication sensor, using said radioelectric network.

### BACKGROUND OF THE INVENTION

Many vegetal products such as fruits need to have a calibrated size to be harvested, shipped and sold. Some fruits are wasted because they are harvested too late. This may happen when the fruits are too ripe and/or when they are oversized to be shipped and sold. In some cases, the fruits remain in the field because it is too early to harvest them. For a given plantation or field it can be difficult to foresee during the harvesting season when fruits are ready for harvesting, how many fruits are ready for harvesting, and where these fruits ready for harvesting are located. This makes it difficult to allocate the workforce in an efficient way: some workers may face work overload while others may be underemployed, and they have to verify, plant by plant, which fruits are ready for harvest.

As an example, banana bunches need to be harvested at a given optimum size. If they are too big, the banana clusters may not fit into standard transport boxes; these bunches will be discarded and thrown away. If they are too small, they are left to grow, because the bunch may otherwise not satisfy the minimum weight per box that is established contractually with customers. As banana clusters are collected by hand by workers in the fields, it would be important to foresee their workload. According to prior art, the harvest-readiness of a plantation or field is assessed manually, typically done once per week, between 8 and 13 weeks of growth (knowing that week zero corresponds to the stage of flower induction, when the banana plant acorn starts showing and leave production stops). In practice this is done manually using calipers which measure the diameter of an individual banana (individual bananas being called "fingers"). If the caliper does not fit the finger, the bunch of bananas is thrown away. If the caliper is too loose, the bunch of bananas will not be harvested. If the caliper fits well around the finger, the bunch is deemed ready to be harvested.

During each assessment run, typically one banana (i.e., one finger) is measured for each plant. This manual assessment requires significant workforce, typically a dozen of workers for a banana field of 100 hectares.

As the fruits often grow inside perforated protective bags in order to protect the fruits from animals such as insects, and from chemical products such as pesticides, these protective bags need to be opened to access the fruit for measurement. Protective bags which have been opened (typically ripped apart) cannot be closed efficiently and will be less efficient as protection.

There is a need to more accurately foresee when, how much and where to harvest fruits. There is also a need to reduce harvest waste and improve harvest quality. There is also a need to develop more efficient assessment methods requiring less workforce, and/or which allow a more frequent assessment.

### SUMMARY DISCLOSURE OF THE INVENTION

In this context, the invention relates to a growth measuring device configured to measure growth of a living being or a part thereof. The growth measuring device comprises a length measuring tool configured to measure a length parameter of a living being or a part thereof. The growth measuring device further comprises a set of wireless transmitters configured to transfer to an external reader a representative parameter representing the length parameter measured by the length measuring tool. More precisely, the device comprises at least one antenna in functional relationship with an electronic memory unit, said representative parameter being stored in said electronic memory unit.

A first aspect of the present invention is a growth measuring device configured to measure growth of a living being such as a plant or a part thereof, comprising:
- a length measuring device configured to measure a length parameter representing a parameter of said living being or a part thereof,
- a set of wireless transmitters configured to transfer to an external reader a parameter representing said length parameter measured by said length measuring device,
said growth measuring tool being characterized in that said set of wireless transmitters comprises:
∘ At least one antenna capable of entering in functional relationship with said external reader at a given frequency range for transferring said parameter representing said length parameter to said external reader, and
∘ A plurality of electronic memory units capable of storing said parameter representing said length parameter, of entering in functional relationship with said at least one antenna, and transferring said parameter to said external reader when said external reader enters in functional relationship with one of said at least one antenna.

According to a first variant, said set of wireless transmitters comprises one antenna and a plurality of electronic memory units, and said growth measuring device is configured such that:
∘ upon growth of said living being, a length parameter representing a parameter of said living being or part thereof is measured by said length measuring device, and a parameter representing said length parameter is entered in one of said electronic memory units,
∘ the parameter representing said length parameter which is transferred to the external reader is always the last parameter which has been entered into anyone of said electronic memory units,
∘ at any time, no more than one memory unit is capable of being read by an external reader.

According to a second variant of this first aspect of the invention, which can be combined with said first variant, said growth measuring device is configured such that:
∘ upon growth of said living being, a length parameter representing a parameter of said living being or part thereof is measured by said length measuring device, and a parameter representing said length parameter is entered in one of said electronic memory units,
∘ the parameter representing said length parameter which is transferred to the external reader is always the last parameter which has been entered into anyone of said electronic memory units,
∘ at any time, no more than one antenna is capable of entering in functional relationship with said external reader operating at a given frequency range.

According to a third variant of this first aspect of the invention, which can be combined with said first variant and/or with said second variant, said length measuring device includes a caliper.

According to a fourth variant of this first aspect of the invention, which can be combined with said first variant and/or with said second variant and/or with said third variant, said set of wireless transmitters comprises a plurality of antennae capable of entering in functional relationship with said external reader at a given frequency range for transferring said parameter representing said length parameter to said external reader, and a plurality of electronic memory units capable of entering in functional relationship with one of said antennae, for storing said parameter representing said length parameter. Advantageously there are as many antennae as electronic memory units.

According to a fifth variant of this first aspect of the invention, which can be combined with said first variant and/or with said second variant and/or with said third variant and/or with said fourth variant, said wireless communication tag is a radio frequency tag configured to communicate with an external reader at a distance between said external reader and said wireless communication tag, said distance being typically comprised between about 20 cm and about 10 metres.

According to a sixth variant of this first aspect of the invention, which can be combined with said first variant and/or with said second variant and/or with said third variant and/or with said fourth variant and/or with said fifth variant, said caliper comprises a first jaw and a second jaw, said first jaw and said second jaw being configured to be able to at least partially surround said living being or said part thereof, and wherein said second jaw is configured to move relative to said first jaw along a longitudinal direction (X-X) of the caliper when growth of the living being results in pushing said first jaw and said second jaw apart.

According to a seventh variant of this first aspect of the invention, which can be combined with said first variant and/or with said second variant and/or with said third variant and/or with said fourth variant and/or with said fifth variant and/or with said sixth variant, said caliper comprises a pointer which is fixed relative to the second jaw,
- wherein the pointer is configured to close an electric circuit between the wireless communication tag and the second jaw, wherein the electric circuit is modified when the living being grows, and/or
- wherein the growth measuring sensor comprises a transmitter including each wireless communication tag, wherein the transmitter is configured to communicate with the external reader, and wherein the transmitter is configured to be electrically connected to the caliper. Said pointer may be a part of said electric circuit or may be in functional relationship with an electrical contact element which is part of said electrical circuit.

According to an eighth variant of this first aspect of the invention, which can be combined with said first variant and/or with said second variant and/or with said third variant and/or with said fourth variant and/or with said fifth variant and/or with said sixth variant and/or with said seventh variant, said pointer is configured to at least partially slide inside a groove of the caliper along the longitudinal direction (X-X) of the caliper when the living being grows, and said pointer is configured to open or close electrical circuits upon sliding inside said groove, said wireless communication tags being part of said circuits.

According to a nineth variant of this first aspect of the invention, which can be combined with said first variant and/or with said second variant and/or with said third variant and/or with said fourth variant and/or with said fifth variant and/or with said sixth variant and/or with said seventh variant and/or with said eight variant, said pointer, or an electrical contact element with which it is in functional relationship, is electrically connected to the transmitter by a first electric wire, and said pointer is electrically connected to an electrical tag contact which is fixed to the caliper, wherein the electrical tag contact is electrically connected to the wireless communication tag by a second electric wire.

According to a tenth variant of this first aspect of the invention, which can be combined with said first variant and/or with said second variant and/or with said third variant and/or with said fourth variant and/or with said fifth variant and/or with said sixth variant and/or with said seventh variant and/or with said eight variant and/or with said nineth variant, said growth detecting device includes a set of wireless communication tags, wherein said pointer is electrically connected at most to one of the wireless communication tags at a time, which is called the pending value tag and wherein the representative length value is the length value stored in the pending value tag.

According to an eleventh variant of this first aspect of the invention, which can be combined with said first variant and/or with said second variant and/or with said third variant and/or with said fourth variant and/or with said fifth variant and/or with said sixth variant and/or with said seventh variant, and/or with said eight variant, and/or with said nineth variant and/or with said tenth variant, said growth measuring device includes a set of electrical tag contacts which are spaced along the longitudinal direction (X-X) of the caliper, wherein each electrical tag contact is electrically connected to a single one of the antennae by electric wire, and wherein the pointer is a switch between a second jaw side of the caliper and the electrical tag contact which is electrically connected to the pending value tag and which is called the pending value tag contact.

According to a twelfth variant of this first aspect of the invention, which can be combined with said first variant and/or with said second variant and/or with said third variant and/or with said fourth variant and/or with said fifth variant and/or with said sixth variant and/or with said seventh variant and/or with said eight variant, and/or with said nineth variant and/or with said tenth variant and/or with said eleventh variant, said caliper comprises a longitudinal support plate which holds the tag contacts along the longitudinal direction (X-X) of the caliper, and wherein the caliper preferably comprises a carrier of the second jaw, wherein the carrier of the second jaw holds the first jaw, wherein the second jaw extends along the longitudinal direction (X-X) of the caliper, and wherein the carrier of the second jaw is fixed to the longitudinal support plate.

According to a thirteenth variant of this first aspect of the invention, which can be combined with said first variant and/or with said second variant and/or with said third variant and/or with said fourth variant and/or with said fifth variant and/or with said sixth variant and/or with said seventh variant, and/or with said eight variant and/or with said nineth variant and/or with said tenth variant and/or with said eleventh variant and/or with said twelfth variant, the growth measuring device further comprises an attaching mechanism, such as a belt, that allows the device to be placed properly and reliably, and in the right position.

A second aspect of the present invention is a growth measuring device configured to measure growth of a living being or of a part thereof, comprising:
- a length measuring device configured to measure a length parameter representing a representative parameter of the living being,
- a set of wireless communication tags comprising at least one antenna, said set being configured to transmit to an external reader a parameter representative of said length parameter,
- wherein said growth measuring device includes a pointer which is electrically connected at a time to at most a single wireless communication tag of said set of wireless communication tags, which is called the pending value tag,
- wherein said pointer is configured to close an electric circuit between said antenna and the pending value tag, wherein the position of the pointer is representative of the length parameter measured by the length measuring device,
- wherein said closed electric circuit is opened when the living being further grows.

This second aspect of the present invention can be combined with any one or more of the variants of the first aspect.

A third aspect of the present invention is a method for detecting growth of living beings or part thereof, using a growth measuring device according to any one of the variants of the first aspect of the present invention, and/or according to the second aspect of the present invention, said method including the following steps:
- measuring a parameter representing a length parameter which represents a representative parameter of the living being using the length measuring tool, said length measuring tool being electrically connected to the wireless communication tag,
- storing said parameter representing a length parameter in a memory unit,
- transmitting said parameter representing a length parameter from the memory unit to an external reader, using said wireless communication tag, wherein the reader reads the representative length value stored within said memory unit.

According to a first variant of said third aspect, said method includes a step comparing the representative length value with a first reference value and/or with a second value.

A fourth aspect of the present invention is a method of collecting or harvesting living beings or parts thereof, which grow in an appropriate environment, said method using a method for detecting growth according to the third aspect of the present invention or any of its variants, and said method including the steps of
- leaving the living being growing, if the measured length value is strictly below the first reference value, and/or
- harvesting the living being or part thereof when the measured length value is between the first reference value and the second reference value.

According to a first variant of said fourth aspect, said living beings are banana plants, and said appropriate environment is a banana farm, comprising the steps of
- providing a plurality of growth measuring devices according to the first aspect of the present invention or according to its first aspect and/or its second aspect and/or its third aspect and/or its fourth aspect and/ or its fifth aspect and/or its sixth aspect and/or its seventh aspect and/or its eighth aspect and/or its nineth aspect and/or its tenth aspect and/or its eleventh aspect, and/or according to the second aspect of the present invention, said growth measuring devices comprising wireless communication tags and an antenna, said growth measuring devices being characterized by a maximum reading distance which is mainly determined by the architecture of the antenna,
- fixing said growth measuring devices to banana fingers, using preferably not more that one of such growth measuring devices per banana plant,
- leaving said banana plants to grow further,
- from time to time, approaching a banana cluster with an external reader within the maximum reading distance of said antenna, and for each cluster reading said parameter representing a length parameter,
- for each cluster, using said parameter representing a length parameter to determine whether said cluster can be harvested.

According to a sub-variant of said first variant, at least a majority of banana bunches are protected by a protection bag, and wherein said reading operation is carried out without opening said protection bag.

A fifth aspect of the present invention is a radioelectric network comprising a plurality of growth measuring devices according to the first aspect of the invention and/or according to any one or more of its variants and/or according to the second aspect of the present invention, and further comprising at least one external reader, and at least one distant computer, said external readers, and each of said sets of wireless transmitters having at least one antenna, and said set of wireless transmitters being configured to be in functional interaction with an external reader at a set frequency F, and said external reader being configured to be in interaction with a distant computer. Said interaction implies a transfer of data from the reader to the distant computer. Said interaction can be wireless interaction or wire-borne interaction.

Thanks to the invention, it is possible to foresee more accurately when, how much and where to harvest living beings such as plants or plant parts, and more generally, whether the animals, plants or fruits are ready to be processed. Harvest waste is reduced, and harvest quality is also improved. Less time and effort are needed to harvest the animals, plants, or fruits. Management of human resources for harvesting tends to be improved.

Living beings such as plants or plant parts may be harvested at a better time and the number of animals, plants or fruits in bad condition and/or oversized is reduced. Harvest routes may be optimized because it is fast and reliably assessed whether plants or plant parts can be harvested.

It is for example no longer needed to open protective bags in order to assess whether it is the right time to harvest the live beings such as plants or plant parts inside the protective bags. Hence, the living beings inside the protective bags may be better protected against weather, animals or chemical products such as plant medicines or pesticides.

Workers are better employed since it is better known, when, where and how much to harvest. The workload of workers is more foreseeable and more stable. The number of workers may be more accurate. There is less work overload and/or work underload.

Thanks to the caliper and the belt-type attaching mechanism, the growth measuring device may be at least partially reused more easily. In particular, the length measuring tool may be easily reused. The caliper may be very resistant to tear, wear and humidity.

The invention also relates to a living being growth detection process carried out with a growth measuring device as defined above. The living being growth detection process includes measuring a length parameter of the growing living being by the length measuring tool, the length measuring tool being electrically connected to the wireless communication tag which is configured to indicate a length parameter of the growing living being.

Said length parameter of the growing living being is called here a "representative" parameter because it is selected according to the purpose of the determination by the purpose putting in place the caliper. Said length parameter can be the diameter of the living being or part of the same. For instance, it can be the diameter of a banana or the diameter of a watermelon, said diameter being taken at a representative location, such as its widest section.

The living being growth detection process includes transferring the parameter representing the length parameter measured by the length measuring tool of the growth measuring device to an external reader or receptor. This is done using a wireless communication tag. Said wireless communication advantageously forms part of said growth measuring device. In a preferred embodiment, said wireless communication tag is a passive tag which makes the parameter representing the length parameter measured by the length measuring tool available to an external reader, and said external reader reads the representative parameter stored within the memory unit the wireless communication tag.

Advantageously, said parameter representing the length parameter measured by the length measuring tool is said length parameter, expressed in a length unit, which can be a metric length unit or a non-metric length unit.

Preferred features of the invention are disclosed in the dependent claims.

The invention also relates to a growth measuring device configured to measure the growth of a living being. The growth measuring device comprises a growth measuring tool configured to measure a length parameter representing a representative parameter of a living being or part thereof, such as its length, height, circumference or any other linear dimension. The growth measuring device comprises a set of wireless communication tags which are configured to transmit to an external reader a parameter representing a length parameter measured by the length measuring tool.

Said length parameter measured by the length measuring tool is a linear dimension.

In a preferred embodiment the growth measuring device includes a pointer which is electrically connected at any one time to at most one single wireless communication tag of the set of wireless communication tags, which is called here the pending value tag. The position of the pointer is representative of the growth value measured by the growth measuring tool. The pointer can close or open an electric circuit of the growth measuring device between the growth measuring tool and the pending value tag. As the living being grows, the position of the pointer is moved, and the electric circuit is modified when the living being is growing.

Said opening or closing of an electric circuit can be implemented by different means. A set of switches can be used.

In a typical embodiment, the growth measuring device according to the invention includes a plurality of wireless tags, but not more than one tag is activated at any one time. The fact that the pointer activates only one tag at any one time creates an advantage in eliminating interference between tags that are spatially close to each other. If more than one tag is activated, to avoid interference, the tags need to be placed apart by a certain separation distance. This need is avoided in the present invention, because in this invention there is only one tag activated at a time; as a consequence, the tags can be placed as close as desired, and the device can comprise a plurality of tags in a compact pack.

In a typical embodiment, said tag comprises an antenna which is designed to respond at a given frequency. Opening or closing the circuit between the growth measuring tool and the pending value tag will then activate or inactivate the antenna. In this way the tag can be inactivated for communicating with an external reader at a given frequency which is controlled by the reader. Said opening or closing of the circuit may be achieved using a switch controlled by the pointer.

Thanks to this invention, the growth of the living being can be sensed more reliably by the growth measuring sensor. In particular, the tag bearing the parameter to be read can be clearly identified and detected by an external reader.

### BRIEF DESCRIPTION OF THE DRAWINGS

Figures 1 to 10 illustrate certain embodiments or features of the invention. They are given here for illustrations only and shall not be interpreted as limiting the invention in any way.
Figure 1 shows different wireless communication tags which can be used for carrying out the present invention.
Figure 2 is a schematic view of a harvesting system according to the invention, comprising a growth measuring device according to a first embodiment of the invention together with an external reader.
Figure 3 shows schematically a wireless communication tag in functional relation with an external reader.
Figure 4 is a schematic view of the growth measuring device of the harvesting system according to the first embodiment of the invention.
Figure 5 is a perspective view of the growth measuring device of the harvesting system according to the first embodiment of the invention.
Figure 6 illustrates a harvesting process which is performed with a harvesting system according to the first embodiment.
Figure 7 is a schematic illustration of the wireless communication between the wireless communication tag of the growth measuring device and an external reader.
Figure 8 shows an example of a data table generated from the data collected during the harvesting process.
Figure 9 schematically shows a radioelectric network according to the invention.
Figure 10 is a schematic view of the growth measuring device of the harvesting system according to another embodiment of the invention.

The following reference numbers are used in the figures and in the description; four-digit reference numbers are referring here to process steps.

| | | | |
|---|---|---|---|
| 1: | Living being | 11: | Protective bag |
| 2: | Growth measuring device | 200: | Harvesting system |
| 3: | Length measuring device | 30: | Caliper |
| 301,302: | First and second jaw of 30 | 310: | Pointer of 30 |
| 320: | Support plate of 30 | 322: | Carrier of 302 |
| 330: | Groove | | |
| 4 | Electric circuit board | 40: | Electric circuit of 3 |
| | 41,42,44,46: Wires | 42a,44a,46a: | Electrical tag contact |
| 5: | Operator | 50: | Plant |
| 51: | Path | | |
| 7: | Transmitter | | |
| 70, 70' : | RFID tag | 71: | Antenna |
| 72: | Substrate | 73: | Cover sheet |
| 74: | Electric conductor | 75: | Stack of tags |
| 8: | Memory unit | | |
| 9: | External reader | 91: | Antenna of 9 |
| 92: | Detection unit | 93: | Display unit (screen) |
| 1010: | Measuring the growth of the living being. | | |
| 1030: | Reading the growth value of the living being. | | |
| 1050: | Comparison between the growth value and a first reference value. | | |
| 1070: | Leaving the living being growing. | | |
| 1090: | First validation step wherein the living is considered as possibly suitable to be harvested. | | |
| 1110: | Comparison between the growth value and a second reference value. | | |
| 1130: | Final invalidation step wherein the living is considered as not plainly suitable to be harvested. | | |
| 1150: | Second validation step wherein the living is considered as suitable to be harvested. | | |

### DETAILED DESCRIPTION OF EMBODIMENTS

The term "living being" 1 is used here for designating a living plant, or a part thereof, such as a trunk of a tree or a fruit, or for designating an animal or a part thereof, with the exclusion of human beings.

The term "transmitter" 7 is used here for designating any device capable of transmitting, in appropriate circumstances, energy (such as electromagnetic waves) and/or information. The term is used here to include both active and passive devices, such as passive RFID tags.

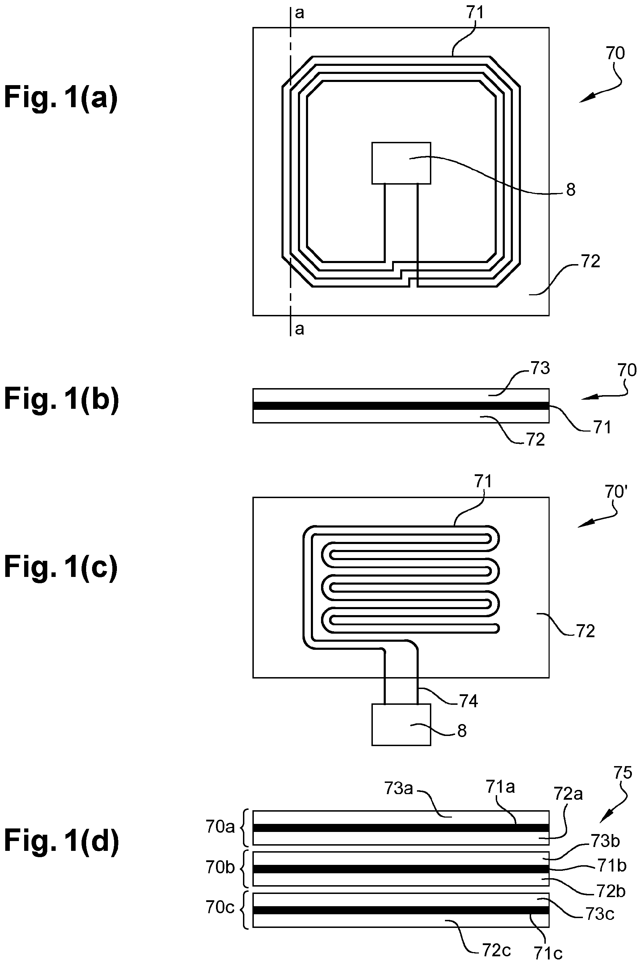

The term "wireless communication tag" or "RFID tag" or simply "tag" is used here for a radiofrequency antenna 71 connected to at least one electronic memory unit 8. Such an RFID tag, which can be used in the framework of the present invention, is shown on figure 1(a) and designated by the numeral 70. The antenna 71 is usually printed onto a substrate 72, such as a polymer sheet. Typically, the electronic memory 8 unit is a memory chip.

In one embodiment, a wireless communication tag comprises an antenna 71 and an electronic memory unit 8. The electronic memory unit 8 is usually located on the same substrate 72 as the antenna 71. It can be glued on the substrate 72 close to the antenna 71. Figure 1(b) schematically shows a perpendicular cross section of figure 1(a) along a line a-a. The electronic memory chip 8 is usually very thin, of the order of magnitude of a typical semi-rigid polymer sheet. Advantageously, the antenna 71 is encapsulated by an adhesive cover sheet 73, such as a polymer sheet.

In other embodiments, the electronic memory unit 8 is not located on the same substrate as the antenna with which it is in functional relationship; this is shown on figure 1(c). In this case, the term "tag" 70' will be used here for the antenna 71 on its substrate 72. The electronic memory unit 8 being outside of the substrate 72, it needs to be put in electrical connection with the antenna 71 using conductors 74 which extend outside of the substrate 72.

In yet other embodiments, a plurality of substrates 72a,72b,72c (with or without their electronic memory unit) are stacked on above the order to form what is called here a "stack of tags"; this is shown on figure 1(d).

In yet other embodiments (not shown on the figures), a wireless transmitter comprises one antenna and a plurality of electronic memory units. In this case, no more than one memory unit is capable of being read by an external reader at any time.

In the framework of the present invention, at any one time there is no more than one electronic memory unit connected to one activated antenna. In other words, only one antenna - memory unit connection is necessary at any moment. This applies both to the embodiment in which the growth measuring device comprises a plurality of wireless communication tags, each of which comprising an antenna and an electronic memory unit, and to the embodiment in which the transmitter comprises one antenna and a plurality of electric memory units.

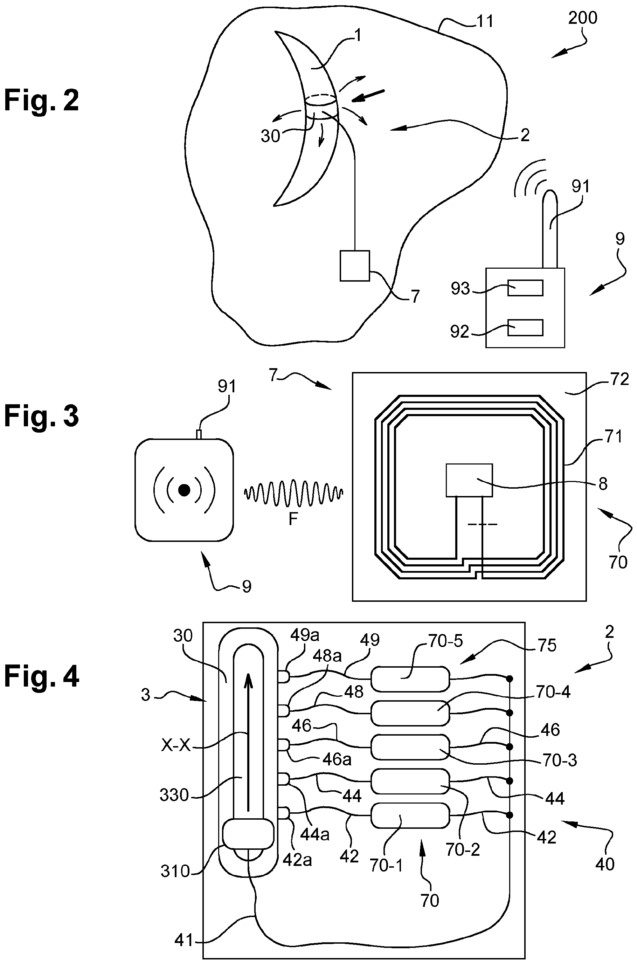

Figure 2 shows a harvesting system 200 according to a first embodiment. The harvesting system 200 includes a growth measuring device 2 and an external reader 9 which is configured to communicate with the growth measuring device 2. The harvesting system 200 is configured to assess whether living beings 1 such as plant parts are ready to be harvested. The living beings 1 are preferably plants or plant parts, such as fruits, and in particular bananas.

As can be seen on figure 4, the growth measuring device 2 includes a growth measuring tool and an electric circuit 40 which includes at least one wireless communication tag 70 such as a RFID tag or an NFC tag. RFID tags are preferred; a reading distance of the order of about one meter to ten meters is practical for carrying out the invention.

The growth measuring device 2 is configured to measure growth of the living beings 1. In the disclosed embodiment, the growth parameter to be measured is a length parameter and the growth measuring tool is a length measuring tool 4, for example for measuring a diameter or a circumferential length of the living being 1. The growth parameter to be measured is preferably the diameter of a banana.

If the living being 1 is a living plant or a plant part, such as a banana, the plant or plant part 1 and the growth measuring device 2 may be held inside a protective bag 11. Protective bag 11 protects the plant or plant part 1 against chemical products such as pesticides or plant medicine, extreme weather such as hail and/or animals such as insects. Protective bag 11 may contain more than one living being or plant part 1, such as a bunch of growing bananas. In this case, protective bag 11 may contain one or more growth measuring devices 2 configured to measure the growth of at least one of the living beings or plant parts 1 inside the protective bag 11. Each growth measuring device 2 within a protective bag 11 is configured to communicate with the external reader 9 through the protective bag 11. This avoids the need to open the protective bag for measuring the length parameter of the plant or plant part.

Reader 9 includes an antenna 91 and a detection unit 92. It can also comprise a display unit 93 such as a screen; this display unit 93 is optional. The reader 9 is configured to communicate with the growth measuring device 2 and to read the measured parameter determined by the growth measuring device 2. Reader 9 is for example a RFID reader or an NFC reader. It operates at a set frequency.

In a specific embodiment the display unit 93 is configured to display information to a user, who is for example a worker in a field. The information shown to the worker is for example whether the living plant or plant part 1 may be harvested or whether the living plant or plant part 1 should remain where it is until it has grown to a target size. In another embodiment, which can be combined with the specific embodiment which has just been mentioned, the reader 9 is configured to store the measured parameter so that it can be processed later; said processing can be carried out within the reader 9 or in an external computer to which these data are transmitted.

The antenna 91 of the external reader 9 is configured to communicate with the wireless communication tags 70 of the growth measuring device 2. In particular, antenna 91 communicates with the activated tag 70a of the growth measuring device 2 when the external reader 9 is close enough of the growth measuring device 2. Due to the interruption of their electric circuit by the switch, the inactivated tags do not respond to the external reader 9.

This is shown schematically on figure 3: The transmitter 7 (which is here a RFID tag 70) comprises a memory unit 8 and an antenna 71 disposed on a substrate 72. External reader 9 communicates with the tag 70 at a given frequency F, which is typically a radiofrequency.

When the antenna 71 of tag 70 is interrupted (symbolized on figure 3 by a dotted line), communication with the external reader 9 is no longer possible at said frequency F; such a tag is called here an "inactivated" or "silent" tag, while a tag which responds to the reading frequency is called an "activated" tag.

The detection unit 92 of the external reader 9 comprises a microcontroller and/or a microprocessor as well as a memory unit (not shown in the figures). The detection unit 92 is configured to compare the representative length parameter of the measured length of the living being 1 with a first reference value. The detection unit 92 is configured to detect that the living being 1 is undersized if the representative length parameter is below the first reference value. The detection unit 92 is configured to compare the representative length parameter with a second reference value, in particular when the living being 1 is not undersized. The detection unit 92 is configured to detect that the living being 1 is oversized to be sold if the representative length parameter is above the second reference value. The detection unit 92 is configured to detect that the living being 1 is ready to be harvested if the representative length parameter is between the first reference value and the second reference value. At least part of these functions of the detection unit 92 may be performed by a distant computer 99.

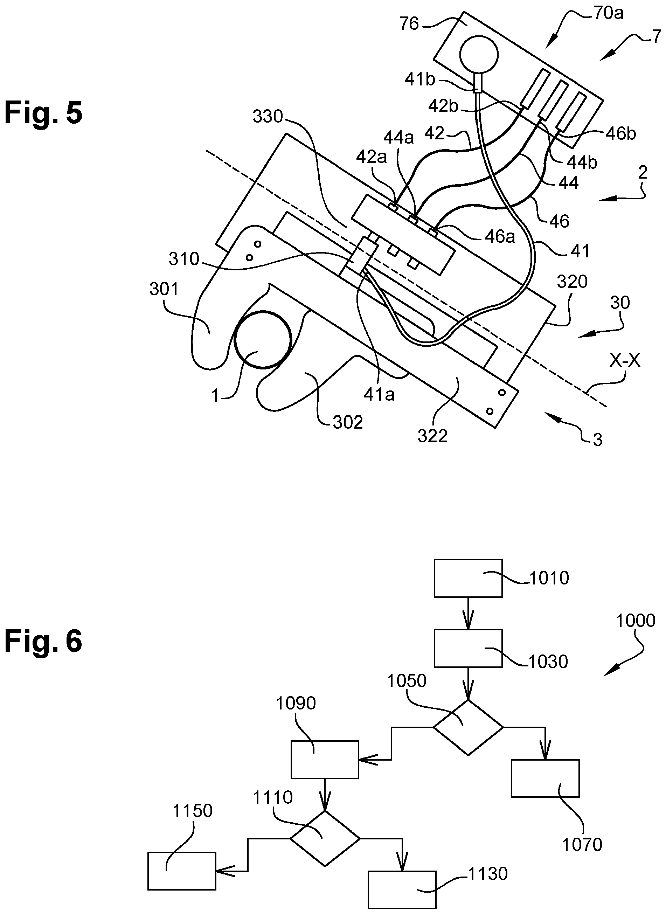

We will now describe specific embodiments of the length measuring device 3 which is an essential feature of the growth measuring device 2 (here also called length measuring tool). This description refers to figures 4 and 5.

This length measuring tool 3 is capable of determining the linear distance between two points. In an advantageous embodiment this length measuring tool is a caliper 30. It is understood that the length measuring tool 3 of the growth measuring device 2 according to the invention is not limited to a caliper. It can further comprise a belt or an elastic member (not shown in the figures) that attaches smoothly to the live being, and more particularly to its circumference, or to the circumference of the part the growth of which is to be monitored. Typically, the growth measuring device 2 is configured to detect a variation in the representative length parameter of 2 mm, and preferably of 1 mm.

In order to allow a person skilled in the art to carry out the invention we will now describe a caliper which can be used for the present invention. The caliper 30 includes a first jaw 301, a second jaw 302, a pointer 310, a longitudinal support plate 320, and a carrier 322 of the second jaw. The caliper 30, except for the pointer 310, can be made of a dielectric, water and wear resistant material, such as a plastic material. The caliper 30 may be used to measure a length parameter representative of the growth status of the living being 1 and/or to gauge the length parameter representative of the growth status of the living being 1 with reference to at least a reference value.

The first jaw 301 is fixed relative to the longitudinal support plate 320. The second jaw 302 is movable along a longitudinal direction X-X of the caliper relative to the first jaw 301.

In a specific embodiment shown on figure 5, first 301 and second 302 jaw are in contact with two opposite sides of the living being 1 or with a part thereof, such that said first 301 and second 302 jaws can measure a linear dimension thereof, such as a diameter. As an example, the first jaw 301 and the second jaw 302 can be put in soft contact with a banana 1, such as to measure its diameter at a given point. In other words, the jaws 301,302 should fit snugly the diameter of the living being or part thereof.

The second jaw 302 should be configured such as to be movable with a resistance low enough to avoid deformation of the living being or the part thereof to which it is attached as said living being or part thereof is growing and said linear dimension is increasing; this allows to measure a length parameter which is a reliable representation of the diameter of said living being or said part thereof.

In the document, and unless mentioned otherwise, an axial direction is parallel to the longitudinal direction X-X of the caliper. In the disclosed embodiment, the longitudinal direction X-X of the caliper is the direction of the length measured by the growth measuring device 3. A direction which is perpendicular to the axial direction and to a height direction is called a transversal direction.

The carrier 322 carries the second jaw 302 so that the second jaw 302 can slide axially along the carrier 322 relative to the first jaw 301. The carrier 322 of the second jaw also holds the first jaw 301. The carrier 322 may be considered as a hold of the caliper 30. The carrier 322 may include a visual scale for a worker, for example when the protective bag 11 containing the living being 1 is open. The carrier 322 is fixed to the longitudinal support plate 320, for example by two side arms which extend transversally. The longitudinal direction of the carrier 322 extends axially. The longitudinal support plate 320 extends axially longitudinally. The longitudinal support plate 320 includes a groove 330 for guiding the pointer 310. The longitudinal support plate 320 holds each electrical tag contact 42a, 44a, 46a of the electric circuit 40. The longitudinal support plate 320 is a support of the caliper, in particular for the first jaw 301, for the carrier 322 and for each electrical tag contact 42a, 44a, 46a. It should be understood that there can be more than three tag contacts, for instance four, five or six.

The groove 330 is a blind groove which extends axially. The groove 330 is configured to guide the pointer 310 relative to the longitudinal support plate 320.

The pointer 310 has a head which protrudes from the groove 330, and the pointer 310 is partially inserted into the groove 330. The pointer 310 is fixed relative to the second jaw 302, and the pointer 310 is for example fastened to the second jaw 302. The pointer 310 extends longitudinally between the second jaw 302 and the longitudinal support plate 320. In the disclosed embodiment, the longitudinal direction of the pointer 310 extends transversally. Pointer 310 is at least partially made of an electrically conductive material.

The pointer 310 is configured such as to open and close an electric circuit 40, which integrates the antenna of the tag and its memory unit. This can be achieved in several ways.

In one embodiment given here as an example, the pointer 310 is electrically connected by a pointer wire extremity 41a to a first electric wire 41, wherein the pointer wire extremity 41a is at first longitudinal extremity of the pointer 310 towards the second jaw side. The pointer 310 is configured to be able to be electrically connected to each electrical tag contact 42a, 44a, 46a at a second longitudinal extremity of the pointer 310 towards the longitudinal support plate side, as the pointer is advancing upon growth of the living being. The pointer 310 is configured to be electrically connected at any one time to at most a single electrical tag contact 42a, 44a, 46a which activates the so-called pending value tag 70a. Thus, the pointer and the electrical tag contact act as a switch capable of opening or closing the electric circuit to which belongs the tag, and more precisely the tag antenna 71.

The pointer 31 is configured to move axially relative to the first jaw 301 and to the longitudinal support plate 320, wherein the axial position of the pointer 310 is representative of the measured length value of the living being 1. More precisely, the pointer 310 is configured to slide axially along groove 330 when the living being 1 grows. The pointer 310 is configured to electrically connect the second jaw side to the transmitter 7 of the growth measuring device 2 to deliver an electric signal which is representative of the length value measured by the caliper 30. In particular, the pointer 310 is configured to close the electric circuit 40 between the pending value tag 70a and the second jaw side. The pointer 310 is configured to open the electric circuit 40 when the pointer 310 is connected to no electrical tag contact 42a, 44a, 46a, for example when the living being 1 is undersized.

The electric circuit 40 comprises a transmitter 7, the pointer 310 of the length measuring tool 3, at least one electrical tag contact 42a, 44a, 46a, and wires 41, 42, 44, 46. The configuration of electric circuit 40 is representative of the growth of the living being 1. The configuration of the electric circuit 40 is modified by the changing position of the pointer 310 when the living being 1 grows.

The transmitter 7 includes at least one wireless communication tag 70, tag wire extremities 42b, 44b, 46b and a pointer wire contact 41b. The transmitter 7 is electrically connected to the caliper 6 by the wires 41, 42, 44, 46. The transmitter 7 is configured to communicate with the reader 9 and to transmit a representative length value of the length measured value by the caliper 30 to the reader 9. More precisely, the transmitter 7 is configured to communicate the length value stored in the pending value tag 70a to the reader 9. Additional information can be communicated by transmitter, such as an ID number of the length measuring tool. This additional information is stored in the memory unit 8 of the pending value tag 70a.

Each wireless communication tag 70 is configured to transfer data to the external reader 9; this is a wireless transfer operating at a set frequency F. Each wireless communication tag 70 for example comprises an antenna 71 and a memory unit 8. In particular, each wireless communication tag 70 is a radiofrequency tag, preferably a radiofrequency identification tag (also known as an RFID tag) or a near field communication tag (also known as an NFC tag). The frequency of the wireless communication tag 70 is for example 13.6 MHz. At this reading frequency the external reader will transfer energy to the antenna 70, enabling the antenna 70 to enter in functional relationship with the memory unit 8 to which it is connected for transferring the data contained in said memory unit 8 to said external reader 9.

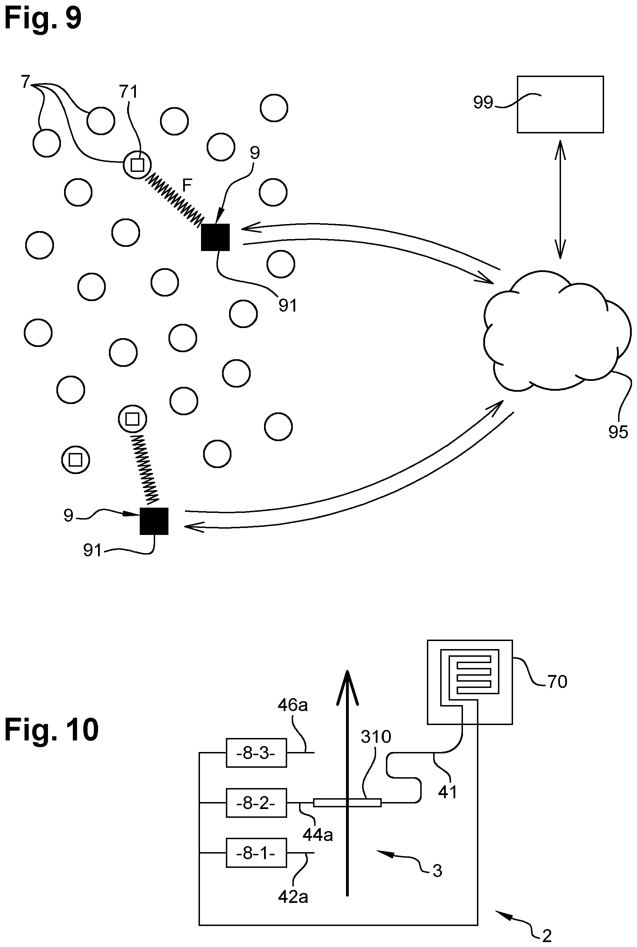

In an alternative embodiment there is one antenna for two or more tags, each tag comprising a memory unit. An example for a growth measuring device 2 according to such an embodiment is shown in figure 10: there is one antenna 70 connected by an electric wire 41 to the movable pointer 310 of length measuring device 3 (the other parts of the length measuring device 3 such as jaws, carrier and support plate, are omitted on figure 10). Three memory units 8-1, 8-2, 8-3 are provided, each having their electrical tag contact 42a, 44a, 46a which can be activated by movable pointer 310 as the length measuring device detects growth of the living being.

Like in the embodiment shown on figure 4, the movable pointer 310 together with the electrical tag contacts acts as a switch or a selector, ensuring that at any time, no more than one memory unit (8) is capable of being read by said external reader (9). Furthermore, it can be seen from figures 4 and 10 that the use of a length measuring device will ensure that the parameter representing the length parameter of the living being which is transferred to the external reader is always the last parameter which has been entered into anyone of said electronic memory units (8).

The wireless communication tag 70 is configured to be detected by an external reader 9 and to communicate with said external reader 9 over a certain distance, which can be comprised typically between a few decimeters and a few meters. The transfer of a radiofrequency signal between the reader 9 and each wireless communication tag 70 is possible through the protective bag 11 which may be used to protect for instance growing fruits such as bananas.

The wireless communication tag 70 is a passive or a semi passive tag. Both passive and semi passive tags can be detected by an external reader 9. Passive wireless communication tags are used in the most preferred embodiments of the present invention. Passive wireless communication tags 70 have no power source and are inexpensive. Semi passive wireless communication tags 70 include a power source, wherein power supplied by the power source is not used to communicate with the reader 8, but is used to update periodically the growth value measured by the growth measuring tool in memory unit 8. Power consumption by semi passive wireless communication tag 70 is very low which makes it more reliable and easier to use outdoors. On figure 5, the transmitters form a stack of tags comprising a plurality of individual wireless tags. Each wireless communication tag 70 is electrically connected to an electrical tag contact 42a, 4a, 46a which is fixed to the caliper 30. More precisely, each electrical tag contact 42a, 44a, 46a is held by the longitudinal support plate 320. Each electrical tag contact 42a, 44a, 46a is configured to electrically connect the pointer 310 to the corresponding wireless communication tag 70.

Electric circuit 40 comprises a first wire 41 which is electrically connected to the pointer 310 at a point wire extremity 41a at the second jaw side. The first wire 41 is electrically connected to the transmitter 7 at the pointer wire contact 41b of the stack of tags 75 (said stack may be mounted on a transmitter circuit board). Electric circuit 40 comprises at least an additional wire, for example a second wire 42, a third wire 44 and a fourth wire 46, which is electrically connecting each electrical tag contact 42a, 44a, 46a to each wireless communication tag 70. The second wire 42, the third wire 44 and the fourth wire 46 are each connected to the tag wire extremities 42b, 44b, 46b of the stack of tags 75. Obviously, in other embodiments more than four wires and more than four tags can be used.

Thanks to the pointer 310, to each electrical tag contact 42a, 44a, 46a, to each wireless communication tag 70, and to each wire 41, 42, 44, 46, a length measurement by the caliper 30 may be transformed into an electric signal which is representative of the length measurement and which may be communicated to the external reader 9. The pointer 310, the wires 41, 42, 44, 46 and the transmitter 7 thus together form a mechanical - electrical transducer for transmitting a representative length value to the reader 9.

In the disclosed embodiment, electric circuit 40 comprises a set of wireless communication tags 70-1, 70-2, 70-3, 70-4, a set of electrical tag contacts 42a, 44a, 46a and a set of wires 42, 44, 46. The wireless communication tags 70-1, 70-2, 70-3, 70-4 are passive wireless communication tags. The pointer 310 is configured to act as an electrical switch between the set of wireless communication tags 70-1, 70-2, 70-3, 70-4 and the second jaw side. In particular, the pointer 310 is configured to be connected to none or a single one of the wireless communication tags 70-1, 70-2, 70-3 at a time, i.e. the pending value tag 70a. The growth measuring device 2 is configured to provide discrete length measures of the living being 1.

The set or stack 75 of wireless communication tags includes for example a first wireless communication tag 70-1, a second wireless communication tag 70-2 and a third wireless communication tag 70-3. The first wireless communication tag 70-1 is connected to a first electrical tag contact 42a by a first electric wire 42. The first wireless communication tag 70-1 is also connected to said first electrical wire 42 by a first tag wire extremity 42b. The second wireless communication tag 70-2 is connected to a second electrical tag contact 44a by a second electric wire 44. The second wireless communication tag 70-2 is also connected to the second electrical wire 44 by a second tag wire extremity 44b. The third wireless communication tag 70-3 is connected to a third electrical tag contact 46a by a third electric wire 46. The third wireless communication tag 70-3 is also connected to the third electrical wire 46 by a third tag wire extremity 46b. The first wireless communication tag 70-1 is, for example configured to detect whether the living being length has reached a first reference value. The second wireless communication tag 70-2 is, for example configured to indicate whether the living being length has reached an optimum reference value. The third wireless communication tag 70-3 is for example configured to detect whether the living being length has reached a second reference value.

Figure 4 shows an embodiment with five wireless communication tags 70-1,70-2,70-3,70-4,70-5. The electrical tag contacts 42a, 44a, 46a, 48a, 49a are spaced along the longitudinal direction X-X of the caliper 30, i.e. along the sliding direction of the pointer 310 in the disclosed embodiment. The electrical tag contacts 42a, 44a, 46a, 48a, 49a are preferably held by the longitudinal support plate 320 behind the groove 330 and at the transmitter side. Each electrical tag contact 42a, 44a, 46a, 48a, 49a is electrically connected to a single one of the wireless communication tags 70-1, 70-2, 70-3, 79-4, 70-5 by one of the electric wires 42, 44, 46, 48, 49. Each electrical tag contact 42a, 44a, 46a, 48a, 49a is configured to be electrically connected to the pointer 310 in order to form a switch between the corresponding wireless communication tag 70-1, 70-2, 70-3, 70-4, 70-5 and the second jaw.

Figure 6 illustrates a harvesting process 1000 which is carried out at least by the growth measuring device 2 and by the external reader 9 of the first embodiment. The harvesting process 1000 includes a step of measuring 1010 the length of the growing living being 1 by the length measuring device 3. The length measuring device 3 is electrically connected to the pending value tag 70a which is configured to indicate a representative length value. The representative length value is representative of the measured length of the living being 1 and it is stored within the memory unit of the pending value tag 70a.

The harvesting process 1000 further includes a step of transmitting 1030 the representative length value from the pending value tag 70a to the reader 8 and of reading the representative length value by the external reader 9. The harvesting process 1000 includes a first step of comparing 1050 the representative length value with a first reference value by the detecting unit 92.

The harvesting process 1000 includes a step 1070 of leaving the living being 1 growing where it is if the representative length value is strictly below the first reference value. The living being 1 is then considered as not ready to be harvested.

If the representative length value is superior to the first reference value at the first comparing step 1050, the living being 1 is considered as possibly suitable to be harvested at a first validation step 1090. After the first validation step 1090, the harvesting process 1000 includes a second step of comparing 1110 the representative length value with a second reference value by the detecting unit 92.

The harvesting process 1000 includes a final invalidation step 1130 if the representative length value is strictly above the second reference value. Living being 1 is considered as not plainly suitable to be harvested. The living being 1 is for example considered as not suitable to be sold.

If the representative length value is inferior to the second reference value at the second comparing step 1150, the living being 1 is considered as plainly suitable to be harvested at a second validation step 1150.

Thanks to the harvesting process, harvesting is planned in view of the number and the location of the living being 1 to be harvested.

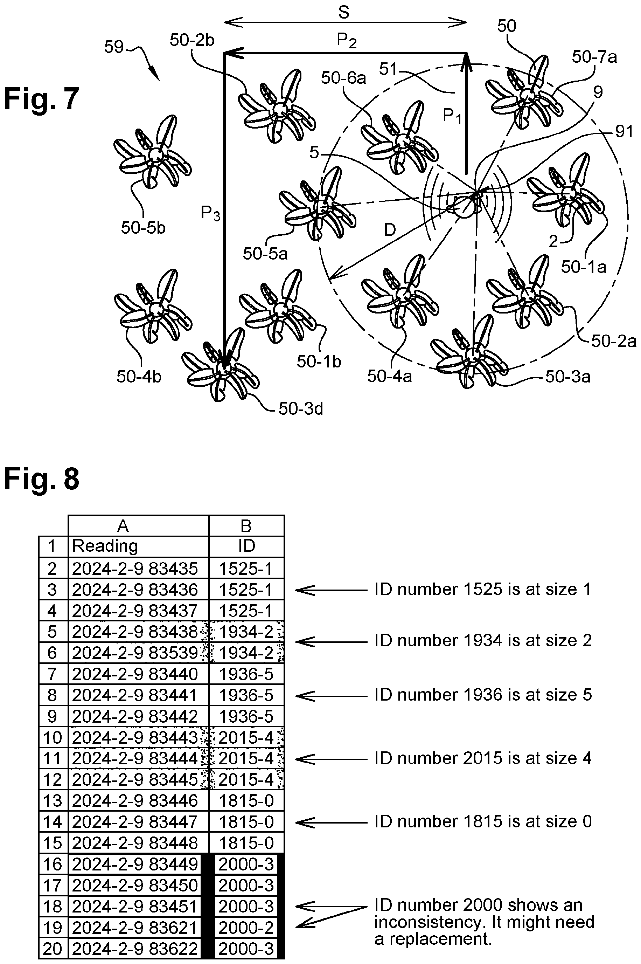

Figure 7 illustrates another aspect of a harvesting process according to the invention. It shows an operator 5 walking through a plantation comprising a set 59 of living plants 50. Said operator 5 carrying an external reader 9. The operator walks through said plantation (here comprising banana plants) on a path 51 symbolized by the arrow P. Each plant 50 carries a growth measuring device 2 according to the invention (shown on the figure only for one of the plants). Reader 9 can read the tag up to a reading distance D. At each given point of the operator's walk through the plantation there is a subset 50a of plants 50, namely 50-1a, 50-2a,50-3a, 50-4a,50-5a,50-6a,50-7a, that can communicate with the reader 9, because their growth measuring devices 2 are within the reading distance D of the reader 9. The other plants form a subset 50b of plants, namely 50-1b, 50-2b, 50-3b, 50-4b, 50-5b, are too far, outside the reading distance D. At each given point of the operator's walk through the plantation, the reader will detect a plurality of growth measuring devices, each of which is identified by its identification code and a parameter representing length parameter measured by the device.

As the operator 5 is advancing on the section P1 of his path, there will be some plant leaving the reading distance D and others will be included in the reading distance D. Therefore, the operator's path P may comprise parallel sweeps, for instance at the border of the plantation he may turn left on path P2 and enter into a return sweep on path P3 parallel to the first one P1. Every sweep should be slightly overlapping with the previous one, in other words the distance P2 between two parallel sweeps P1, P3 should be less than the reading distance D. As an example, if the reading distance D is 7 meters, then the distance between two parallel sweeps may be of the order of 5 meters. At this stage, the reader will most likely gather information from the same plant several times: the method according to the invention includes redundancy.

Operator 5 can be replaced by an autonomous vehicle or by a drone.

Figure 8 shows an example of a data table generated from the data collected during the harvesting process. The Reading column is a timestamp containing the date and a number for the hour, minutes, and seconds. As an example, row 2 reads as follows: year 2024, month 2, day 9, 8:34:45 a.m. The ID column is composed of two pieces of information. The first component is an ID number. A location can be assigned to it on the database, expressing which lot, row, and tree numbers this ID corresponds to. A map can be established with the tree numbers, and periodically a new ID can be assigned to each tree, for example after each harvest. The second component is the size of the banana (i.e., which tag is active at that moment). The database has been configured such that sizes 0 to 2 mean that the banana is too small to be harvested, and the operator will therefore not harvest this bunch and let it grow further. Sizes 3 and 4 represent an ideal harvest size, and the operator will harvest this bunch. Size 5 is too big to be harvested, because such a bunch will not be packable in standard boxes.

The last five lines of the data table shown in figure 8 reveal an inconsistency, showing two active tags. This device is faulty and needs to be replaced.

Figure 9 shows a radioelectric network according to the invention, comprising a plurality of growth measuring devices according to the invention, at least one external reader 9, and at least one computer 99. As described above, each of said growth measuring devices 2 comprises a set of wireless transmitters 7, said set having at least one antenna 71, said set of wireless transmitters being configured to be in functional interaction with an external reader 9 at a set frequency F. Said reader is configured to be in interaction with a distant computer 99. This interaction can be wireless or wire-borne. Wireless interaction can use any means of data transmission 95, such as residential servers, cloud-based servers and the like.

The interaction between the reader and the transmitter is such that the transmitter retrieves the information stored in the last active memory unit 8 of a transmitter 7 of substantially each of said plurality of growth measuring devices. Said data can be treated in the reader 9 and/or transmitted to the distant computer 99. In particular, said data treatment has two functions. The first function is to inform the operator which plant needs to be harvested. The second function is to gather data on growth which can be used for various monitoring purposes and statistical evaluation.

In another embodiment (not illustrated by a figure), electric circuit 3 comprises a single wireless communication tag 70, a single electrical tag contact 42a, the first wire 41 and a second wire 42. The wireless communication tags 70 is a semi passive wireless communication tag. Pointer 310 is configured to be an electrical switch between the wireless communication tag 70 and the second jaw side. The wireless communication tag 70 is the pending value tag 70a. The growth measuring device 2 is configured to provide continuous or partially continuous length measures of the living being 1.

The wireless communication tag 70 is for example connected to the electrical tag contact 42a by the second electric wire 42. The wireless communication tag 70 is also connected to the second electrical wire 42 by a tag wire extremity 42b. The wireless communication tag 70 is for example configured to detect whether the living being length has reached a first reference value. The wireless communication tag 70 is for example configured to indicate whether the living being length has reached an optimum reference value. The wireless communication tag 70 is, for example configured to detect whether the living being length has reached a second reference value.

The invention as it has just been described may be modified within the scope of the claims.

The invention can be applied to living beings of many different kinds. For example, the living being 1 may be an animal such as a turkey or a lobster. Besides tree trunks and bananas which have already been mentioned, the use of the growth measuring device according to the invention is advantageous for many other fruits such as melons, watermelons, pineapples, avocadoes.

In a specific embodiment (not illustrated by a figure), the growth measuring device according to the invention may include at least one specific sensor configured to detect one or more additional parameters other than a length parameter. The sensor is connected to memory unit 8 of the transmitter 7 and transmits at least one parameter to said memory unit. Said parameter other than a length parameter can for instance be color, electrical conductivity, pH, surface hardness. The sensor being an active component, will require a power source, which may be a microbattery. In this embodiment the growth measuring device is configured to transmit at least two parameters to the external reader 9, namely the length parameter and the at least one additional parameter other than a length parameter.

Said at least one additional parameter is advantageously related to the growth or ripening of the living being or the fruit. For example, an additional parameter to be measured may be a color, softness, humidity, temperature, etc.

## Claims

1. A growth measuring device (2) configured to measure growth of a living being (1) such as a plant or a part thereof, comprising:
- a length measuring device (3) configured to measure a length parameter representing a parameter of said living being (1) or a part thereof,
- a set of wireless transmitters (7) configured to transfer to an external reader (9) a parameter representing said length parameter measured by said length measuring device (3),
said growth measuring device being **characterized in that**:
- said set of wireless transmitters comprises:
∘ at least one antenna (71) capable of entering in functional relationship with said external reader (9) at a given frequency range for transferring said parameter representing said length parameter to said external reader, and
∘ a plurality of electronic memory units (8) capable of storing said parameter representing said length parameter, of entering in functional relationship with said at least one antenna (71), and transferring said parameter to said external reader (9) when said external reader (9) enters in functional relationship with one of said at least one antenna (71),
- said growth measuring device (3) is configured such that:
∘ upon growth of said living being, a length parameter representing a parameter of said living being (1) or part thereof is measured by said length measuring device (3), and a parameter representing said length parameter is entered in one of said electronic memory units (8),
∘ the parameter representing said length parameter which is transferred to the external reader is always the last parameter which has been entered into anyone of said electronic memory units (8),
∘ at any time, no more than one memory unit (8) is capable of being read by said external reader (9).

2. A growth measuring device according to claim 1, **characterised in that** said length measuring device (3) includes a caliper (30).

3. The growth measuring device (2) according to claim 1 or 2, wherein said wireless communication tag (70) includes a radiofrequency tag.

4. The growth measuring device (2) according to claim 1 or claim 2, wherein said wireless communication tag (70) is a radio frequency tag configured to communicate with an external reader (9) at a distance between said external reader (9) and said wireless communication tag (70), said distance being comprised between about 20 cm and about 10 metres.

5. The growth measuring device (2) according to any one of claims 2 to 4,
- wherein said caliper (30) comprises a first jaw (301) and a second jaw (302), said first jaw (301) and the second jaw (302) being configured to be able to at least partially surround said living being or said part thereof, and
- wherein the second jaw (302) is configured to move relative to the first jaw (301) along a longitudinal direction (X-X) of the caliper when growth of the living being (1) results in pushing said first jaw (301) and said second jaw (302) apart.

6. The growth measuring device (2) according to any one of claims 1 to 5,
- wherein the caliper (30) comprises a pointer (310) which is fixed relative to the second jaw (302), wherein the pointer (310) is configured to close an electric circuit (40) between the wireless communication tag (70) and the second jaw (302), wherein the electric circuit (40) is modified when the living being (1) grows, and/or
- wherein the growth measuring sensor (2) comprises a transmitter (7) including each wireless communication tag, wherein the transmitter (7) is configured to communicate with the external reader (9), and wherein the transmitter (7) is configured to be electrically connected to the pointer (310).

7. The growth measuring device (2) according to any of claims 1 to 6,
- wherein the pointer (310) is configured to at least partially slide inside a groove (330) of the caliper (30) along the longitudinal direction (X-X) of the caliper when the living being (1) grows, and
wherein said pointer is configured to open or close electrical circuits upon sliding inside said groove, said wireless communication tags being part of said circuits.

8. The growth measuring device (2) according to any of claims 1 to 7,
- wherein the pointer (310) is electrically connected to the transmitter (7) by a first electric wire (41), and wherein the pointer (310) is electrically connected to an electrical tag contact (42a, 44a, 46a) which is fixed to the caliper, wherein the electrical tag contact (42a, 44a, 46a) is electrically connected to the wireless communication tag by a second electric wire.

9. The growth measuring device (2) according to any one of the preceding claims 5 to 7, **characterized in that** it includes a set of wireless communication tags (70, 71, 72, 73),
- wherein the pointer (310) is electrically connected at most to one of the wireless communication tags (70) at a time, which is called the pending value tag (70a), and wherein the representative length value is the length value stored in the pending value tag (70a).

10. The growth measuring device (2) according the claim 9, **characterized in that** it includes a set of electrical tag contacts (42a, 44a, 46a) which are spaced along the longitudinal direction (X-X) of the caliper, wherein each electrical tag contact (42a, 44a, 46a) is electrically connected to a single one of the wireless communication tags (70) by electric wire (42),
- wherein the pointer (310) functions as a switch between a second jaw side of the caliper (630) and the electrical tag contact (42a, 44a, 46a) which is electrically connected to the pending value tag (70a) and which is called the pending value tag contact.

11. The growth measuring device (2) according to claim 10, wherein the caliper (6) comprises a longitudinal support plate (320) which holds the tag contacts along the longitudinal direction (X-X) of the caliper,
- wherein the caliper (30) preferably comprises a carrier (322) of the second jaw (302), wherein the carrier (322) of the second jaw (302) holds the first jaw (301), wherein the carrier (322) of the second jaw (302) extends along the longitudinal direction (X-X) of the caliper and wherein the carrier (322) of the second jaw (302) is fixed to the longitudinal support plate (320).

12. A method for detecting growth of living being (1) or part thereof, using a growth measuring device (2) according to any one of the preceding claims, including the following steps:
- measuring (1010) a parameter representing a length parameter which represents a representative parameter of the living being (1) using the length measuring tool (4), said length measuring tool (3) being electrically connected to the wireless communication tag,
- storing said parameter representing a length parameter in a memory unit (8),
- transmitting (1030) said parameter representing a length parameter from the memory unit to an external reader (9), using said wireless communication tag, wherein the reader (9) reads the representative length value stored within said memory unit.

13. A method according to claim 12, including a step comparing (1050, 1110) the representative length value with a first reference value and/or with a second reference value.

14. A method of collecting or harvesting living beings or parts thereof, which grow in an appropriate environment, said method using a method for detecting growth according to any of claims 12 or 13, and said method including the steps of
- leaving (1070) the living being (1) growing, if the measured length value is strictly below the first reference value, and/or
- harvesting (1150) the living being (1) when the measured length value is between the first reference value and the second reference value.

15. A method according to claim 14, wherein said living beings are banana plants, and said appropriate environment is a banana farm, comprising the steps of
- providing a plurality of growth measuring devices according to any of claims 1 to 9, said growth measuring devices comprising wireless communication tags and an antenna, said growth measuring devices being **characterized by** a maximum reading distance which is determined by the architecture of the antenna,
- fixing said growth measuring devices to banana fingers, using preferably not more that one of such growth measuring devices per banana plant,
- leaving said banana plants to grow further,
- from time to time, approaching a banana cluster with an external reader (9) within the maximum reading distance of said antenna, and for each cluster reading said parameter representing a length parameter,
- for each cluster, using said parameter representing a length parameter to determine whether said cluster can be harvested.
